# EUROPEAN PATENT APPLICATION

(11) **EP 2 674 607 A1**
(43) Date of publication of application: **18.12.2013**
(21) Application number: 12744449.5
(22) Date of filing: 07.02.2012
(51) Int. Cl.: F02M 37/22, B01J 39/04, B01J 47/06, F02M 37/00

(54) **METAL ION ELIMINATION FILTER**

(30) Priority: 09.02.2011 JP 2011026190
(71) Applicant: Hino Motors Ltd., Tokyo 191-8660 (JP)
(72) Inventor: NAKAMURA, Yoichiro, Hino-shi Tokyo 191-8660 (JP)
(74) Representative: Walcher, Armin
(86) International application number: PCT/JP2012/000794
(87) International publication number: WO 2012/108176

(57) **Abstract**

In a metal ion elimination filter 14 for elimination of any metal ions in fuel 2, a filter body 16 filled with ion-exchange resin 15 for adsorption of metal ions through ion exchange is incorporated in a fuel feed passage (feed conduit 9) from a fuel tank 1 to an injector 5. A fuel return passage (return conduit 13) for return of the excessive fuel 2 in the injector 5 to the fuel tank 1 is passed through the filter body 16 to heat the ion-exchange resin 15 with waste heat of the returning fuel 2.

## Description

### Technical Field

The present invention relates to a metal ion elimination filter.

### Background Art

In a field of engine fuel injection, it has been known that any metal ions in fuel may cause salt reaction with fuel components into solid metallic salts. Since such solid metallic salts left unattended may bring about malfunction of an injector or other slide member and/or block the fuel flow, ingenuity has been exercised in selection of constitutive members for the fuel injection and/or in surface finishing thereof so as to avoid any and all intrusion of metal ions into the fuel.

However, for example when inferior fuel originally has metal components, production of solids due to salt reaction in the fuel is unavoidable. Thus, incorporated in a fuel feed passage from a fuel tank to an injector is a metal ion elimination filter for elimination of metal ions in the fuel.

As a prior art literature pertinent to this kind of metal ion elimination filter, there exists, for example, the following Patent Literature 1.

### Citation List

### Patent Literature

[Patent Literature 1] JP 2010-48248A

### Summary of Invention

### Technical Problems

However, in the conventional metal ion elimination filter, fuel is passed through ion-exchange resin immersed in a water reservoir to dissolve metal components in water, metal ions dissolved in the water being adsorbed to the ion-exchange resin for elimination thereof. This requires an operation of submerging the fuel into the water; and thus, it is feared that the fuel passed through the metal ion elimination filter is guided to the engine while the fuel contains moisture.

Alternatively, elimination of any metal ions from the fuel may be attained, without submersion of the fuel into water, by use of a technique that the fuel is directly passed through ion-exchange resin having increased reaction rate of ion exchange through heating by a heater. This, however, requires the heater to be capacious for heating of the ion-exchange resin.

The invention was made in view of the above and has its object to provide a metal ion elimination filter which can eliminate metal ions in fuel by directly passing the fuel through ion-exchange resin having increased reaction rate of ion exchange by heating the ion-exchange resin without use of a heater.

### Solution to Problems

The invention is directed to a metal ion elimination filter for elimination of metal ions in fuel, characterized in that a filter body filled therein with ion-exchange resin for adsorption of metal ions through ion exchange is incorporated in a fuel feed passage from a fuel tank to an injector, a fuel return passage for return of excessive fuel in the injector to the fuel tank being via said filter body to heat said ion-exchange resin with waste heat of the returning fuel.

Thus, in this manner, the high-temperature returning fuel from the injector to the fuel tank is heat-exchanged with the ion-exchange resin in the filter body so that the waste heat possessed by the returning fuel can be effectively utilized to heat the ion-exchange resin, leading to increased reaction rate of the ion-exchange resin. When the fuel in the fuel feed passage is passed through the filter body, metal components in the fuel are adsorbed with ion exchange to the ion-exchange resin, the fuel made free from the metal components being guided to the injector.

Usually provided in the fuel return passage is a fuel cooler for cooling of the fuel to be returned to the fuel tank for prevention of high temperature in the fuel tank. Where the fuel return passage is passed through the filter body at a position upstream of the fuel cooler, then waste heat can be effectively recovered from the fuel before the fuel is cooled by the fuel cooler and heat load of the fuel cooler can be lowered.

### Advantageous Effects of Invention

According to the above-mentioned metal ion elimination filter of the invention, various excellent effects can be obtained as follows.

(I) Metal ions can be eliminated in fuel by directly passing the fuel through ion-exchange resin having increased reaction rate of ion exchange through heating of the ion-exchange resin without use of a heater and with effective utilization of waste heat possessed by the returning fuel from the injector. Thus, resolved are a problem that the metal ion elimination filter is large-sized and has deteriorated mountability due to a heater as fitting and a problem that electricity is required for heating of the heater, leading to heavier burden on a battery. Moreover, an operation of submerging the fuel into water is made unnecessary so that definitely cast aside is a fear that the fuel passed through the metal ion elimination filter is guided to an engine while the fuel contains moisture.

(II) Where the fuel return passage is passed through the filter body at the position upstream of the fuel cooler, waste heat can be effectively recovered from the fuel before the fuel is cooled by the fuel cooler and heat load of the fuel cooler can be lowered, leading to lowering in capacity of the fuel cooler.

### Brief Description of Drawing

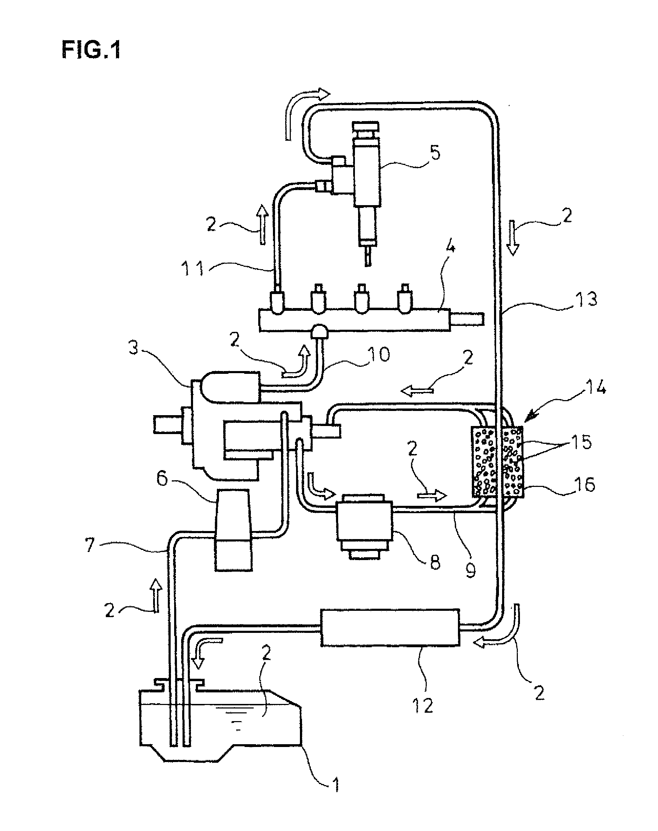

Fig. 1 is a schematic view showing an embodiment of the invention.

### Description of Embodiment

An embodiment of the invention will be described in conjunction with the drawing.

Fig. 1 shows the embodiment of the invention. Schematically illustrated in Fig. 1 is application of a metal ion elimination filter of the invention to a typical common rail type fuel injection device. In the illustrated embodiment, fuel 2 in a fuel tank 1 is pressurized by a fuel pump 3.

The fuel pump 3 is driven by an engine output and serves to pressurize the fuel 2 to a pressure required and feed the same to a common rail 4 for storage thereof under pressure-accumulated state, the fuel 2 in the common rail 4 being fed to injectors 5 each for each cylinder of the engine for injection into the cylinder.

In the fuel fed from the common rail 4 to the injector 5, excessive fuel 2 not used for injection to the respective cylinders is returned as returning fuel 2 from the respective injectors 5 to the fuel tank 1.

The fuel feed passage from the fuel tank 1 to the injector 5 comprises a feed conduit 7 for feed of the fuel 2 in the fuel tank 1 to the fuel pump 3 via a prefilter 6, a feed conduit 9 for recovery again via a fuel filter 8 of the fuel 2 fed to the fuel pump 3, a feed conduit 10 for feeding the fuel 2 passed through the fuel filter 8 to the common rail 4, and a feed conduit 11 for feed of the fuel 2 from the common rail 4 to the injector 5, a fuel return passage for returning the excessive fuel 2 in the injector 5 via a fuel cooler 12 to the fuel tank 1 being constituted by a return conduit 13.

In the embodiment, arranged in the feed conduit 9 and downstream of the fuel filter 8 is a metal ion elimination filter 14 which comprises a filter body 16 filled therein with grainy ion-exchange resin 15 for adsorption of the metal ions through ion exchange into which a portion of the return conduit 13 upstream of the fuel cooler 12 is entered for passing through the ion-exchange resin 15 such that the ion-exchange resin 15 can be heated by waste heat of the returning fuel 2.

Thus, in this manner, the high-temperature returning fuel 2 from the injector 5 to the fuel tank 1 is heat-exchanged with the ion-exchange resin 15 in the filter body 16 so that the ion-exchange resin 15 can be heated by effective utilization of waste heat possessed by the returning fuel 2, which increases the reaction rate of ion exchange in the ion-exchange resin 15. Upon passage of the fuel 2 in the feed conduit 9 through the filter body 16, the metal components in the fuel 2 are adsorbed with ion exchange to the ion-exchange resin 15, the fuel 2 made free from the metal components being guided to the injector 5.

Thus, according to the above embodiment, metal ions can be eliminated in fuel 2 by directly passing the fuel 2 through ion-exchange resin 15 having increased reaction rate of ion exchange through heating of the ion-exchange resin 15 without use of a heater and with effective utilization of waste heat possessed by the returning fuel 2 from the injector 5. Thus, resolved are a problem that the metal ion elimination filter 14 is large-sized and has deteriorated mountability due to a heater as fitting and a problem that electricity is required for heating of the heater, leading to heavier burden on a battery. Moreover, an operation of submerging the fuel 2 into water is made unnecessary so that definitely cast aside is a fear that the fuel 2 passed through the metal ion elimination filter 14 is guided to an engine while the fuel contains moisture.

Since the return conduit 13 is passed through the filter body 16 at the position upstream of the fuel cooler 12, waste heat can be effectively recovered from the fuel 2 before the fuel is cooled by the fuel cooler 12 and heat load of the fuel cooler 12 can be lowered, leading to lowering in capacity of the fuel cooler 12.

It is to be understood that a metal ion elimination filter according to the invention is not limited to the above embodiment and that various changes and modifications may be made without departing from the scope of the invention. For example, the metal ion elimination filter 14 may be provided likewise downstream of the prefilter 6 in the feed conduit 7. The metal ion elimination filter 14 may be integral with foreign-matter-removing filters such as the prefilter 6 and the fuel filter 8. The ion-exchange resin 15 may be heat exchanged with the returning fuel 2 through a heat exchanger or through contact of the return conduit 13 on an outer surface of the filter body 16.

### Reference Signs List

- 1: fuel tank
- 2: fuel
- 3: fuel pump
- 5: injector
- 8: fuel filter
- 9: feed conduit (fuel feed passage)
- 12: fuel cooler
- 13: return conduit (fuel return passage)
- 14: metal ion elimination filter
- 15: ion-exchange resin
- 16: filter body

## Claims

1. A metal ion elimination filter for elimination of metal ion in fuel comprising a filter body filled therein with ion-exchange resin for adsorption of metal ions through ion exchange and incorporated in a fuel feed passage from a fuel tank to an injector, a fuel return passage for return of excessive fuel in the injector to the fuel tank being via said filter body to heat said ion-exchange resin with waste heat of the returning fuel.

2. The metal ion elimination filter as claimed in claim 1, wherein the fuel return passage is passed through the filter body at a position upstream of the fuel cooler.
